(19) Europäisches Patentamt
European Patent Office
Office européen des brevets

(11)  **EP 2 767 926 A1**

(12)  **DEMANDE DE BREVET EUROPEEN**

(43) Date de publication:
**20.08.2014  Bulletin 2014/34**

(51) Int Cl.:
*G06K 9/00* *(2006.01)*        *G06K 9/46* *(2006.01)*

(21) Numéro de dépôt: **14154842.0**

(22) Date de dépôt: **12.02.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **15.02.2013  FR 1351315**

(71) Demandeur: **SAGEMCOM DOCUMENTS SAS**
**92500 Rueil Malmaison (FR)**

(72) Inventeurs:
• **Berger, Jérôme**
  **92500 RUEIL MALMAISON (FR)**
• **Carrie, Aurore**
  **92500 RUEIL MALMAISON (FR)**

(74) Mandataire: **Maillet, Alain**
**Cabinet Le Guen Maillet**
**5, place Newquay**
**B.P. 70250**
**35802 Dinard Cedex (FR)**

(54)  **Procédé et dispositif de décision si un traitement d'image est pertinent pour une image**

(57)  L'invention concerne un procédé de décision parmi un ensemble d'images constituées de pixels, d'au moins une image pour laquelle un traitement de ladite image est pertinent. Selon l'invention, on analyse (E200) de chaque pixel de l'image et de ses pixels voisins, on détermine (E201) une apparence globale de l'image à partir de l'analyse de chaque pixel et on décide (E202) si le traitement de ladite image est effectué en fonction de l'apparence globale de l'image déterminée.

E200  Analyse de chaque pixel et des voisins

E201  Détermination de l'apparence globale de l'image

E202  Décision sur le traitement

Fig. 2

EP 2 767 926 A1

**Description**

La présente invention concerne un procédé et un dispositif de décision parmi un ensemble d'images constituées de pixels, d'au moins une image pour laquelle un traitement de ladite image est pertinent.

La numérisation des documents est largement répandue de nos jours. La numérisation des documents apporte des solutions pour le stockage de documents et leur utilisation ultérieure. La numérisation et la mémorisation sont souvent gourmandes en ressources de traitement et en ressources de stockage.

Les images numérisées sont souvent sujettes à des traitements supplémentaires tels que la reconnaissance de caractères, des améliorations du rendu de photos numérisées, ou la reconnaissance d'images contenant des graphiques et des légendes. Tous ces traitements sont coûteux en ressources de traitement.

Des solutions telles que la reconnaissance de caractères permettent de réduire grandement la ressource mémoire nécessaire au stockage d'un document qui comporte du texte. Malheureusement, comme cela a été dit, la reconnaissance de caractères est coûteuse en termes de ressources de calcul et de traitement.

De plus, la numérisation et la mémorisation ne sont intéressantes que pour une partie d'un document.

Par exemple, l'intérêt de la mémorisation de documents commerciaux tels que des factures varie selon l'utilisateur du document.

Pour un service comptable, les différents montants figurant sur une facture sont primordiaux, les informations telles que les conditions générales de ventes ne sont pas d'un intérêt essentiel pour eux.

Au contraire, pour un service juridique, les différents montants figurant sur la facture ne sont pas particulièrement intéressants, les informations telles que les conditions générales de ventes sont par contre d'un intérêt essentiel en cas de litige.

Actuellement il n'existe pas de solution technique qui permettrait de distinguer, dans un document, s'il est intéressant d'effectuer un traitement sur un document ou non.

La présente invention a pour but de résoudre les inconvénients de l'art antérieur en proposant un procédé et un dispositif qui permettent de déterminer si le contenu d'un document est susceptible d'être intéressant pour un traitement ultérieur de celui-ci.

A cette fin, selon un premier aspect, l'invention propose un procédé de décision parmi un ensemble d'images constituées de pixels, d'au moins une image pour laquelle un traitement de ladite image est pertinent, caractérisé en ce que le procédé comporte les étapes, exécutées par un dispositif, de :

- analyse de chaque pixel de l'image et de ses pixels voisins,
- détermination d'une apparence globale de l'image à partir de l'analyse de chaque pixel,

- décision si le traitement de ladite image est effectué en fonction de l'apparence globale de l'image déterminée.

La présente invention concerne aussi un dispositif de décision pour une image constituée de pixels, si un traitement de ladite image est pertinent, caractérisé en ce que le procédé comporte les étapes, exécutées par un dispositif:

- des moyens d'analyse de chaque pixel de l'image et de ses pixels voisins,
- des moyens de détermination d'une apparence globale de l'image à partir de l'analyse de chaque pixel,
- des moyens de décision si le traitement de ladite image est effectué en fonction de l'apparence globale de l'image déterminée.

Ainsi, il est possible de déterminer si le contenu d'un document est susceptible d'être intéressant pour un traitement ultérieur et ainsi économiser les ressources nécessaires à un tel traitement si celui-ci n'est pas nécessaire.

Selon un mode particulier de l'invention, l'apparence globale est l'uniformité de la répartition des lignes de texte dans l'image.

Les inventeurs de la présente invention ont découvert qu'en effectuant une analyse sur l'uniformité de la répartition de texte dans un document, il est possible de déterminer si le contenu du document est important pour une utilisation future par des utilisateurs qui ont des besoins connus et donc s'il est pertinent de consommer des ressources pour effectuer une reconnaissance de caractères sur le document ou partie de celui-ci.

En effet, les inventeurs de la présente invention ont remarqué que pour un document tel qu'une facture, les conditions générales de vente sont uniformément réparties dans l'image formée par la numérisation du document. Le document ou la partie du document comprenant les différents montants figurant sur une facture ne sont pas uniformément répartis dans l'image formée par la numérisation du document.

Grâce à cette découverte, il est possible de déterminer automatiquement si une reconnaissance de caractères est utile pour un document, et donc d'optimiser l'utilisation des ressources nécessaires à une reconnaissance de caractères.

Selon un mode particulier de l'invention, l'uniformité de la répartition de texte dans l'image est déterminée en effectuant les étapes de :

- détermination, pour chaque pixel de l'image d'au moins un gradient,
- sommation, pour chaque ligne de pixels de l'image, des gradients des pixels de la ligne,
- détermination des lignes qui comportent des maxima locaux à partir des résultats des sommes,
- détermination si le texte est uniformément réparti ou non dans l'image en fonction de la régularité du placement des lignes comportant des maxima locaux dans l'image.

Selon un mode particulier de l'invention, le au moins un gradient est un gradient dont l'orientation est identique à l'orientation présumée du texte dans l'image.

Les inventeurs de la présente invention ont remarqué qu'en utilisant un gradient dont l'orientation est identique à l'orientation présumée du texte dans l'image, les résultats sont améliorés par rapport à une utilisation d'une norme de gradients horizontaux et verticaux.

De plus, la présente invention est adaptée aux différents types d'alphabets ou orientation des textes qui existent dans le monde.

Selon un mode particulier de l'invention, le procédé comporte en outre une étape de filtrage des valeurs des gradients sommés.

Selon un mode particulier de l'invention, le filtrage des valeurs des gradients sommés est réalisé en effectuant, pour chaque ligne, une moyenne de la somme des gradients de la ligne avec au moins la somme des gradients d'au moins une ligne voisine de la ligne.

Ainsi, la détermination de l'uniformité de la répartition d'un texte est améliorée.

Selon un mode particulier de l'invention, la détermination des lignes qui comportent des maxima locaux est effectuée en comparant pour chaque ligne de l'image, la somme filtrée de la ligne avec les sommes filtrées de lignes voisines de la ligne et si la somme filtrée de la ligne déterminée est supérieure aux sommes filtrées des lignes voisines, la ligne comporte un maximum local.

Ainsi, la détermination de l'uniformité de la répartition d'un texte est améliorée et est peu coûteuse en ressources.

Selon un mode particulier de l'invention, le procédé comporte en outre une étape de détermination de distances, exprimées en nombre de lignes entre les lignes comportant des maxima locaux les plus proches deux à deux.

Selon un mode particulier de l'invention, le procédé comporte en outre les étapes de :

- détermination d'une moyenne et d'un écart type à partir des distances déterminées,
- comparaison du rapport entre la moyenne et l'écart-type déterminés à partir des distances à un seuil,

et la détermination si le texte est uniformément réparti ou non dans l'image est effectuée en comparant le rapport au seuil prédéterminé.

Ainsi, la détermination de l'uniformité de la répartition d'un texte est améliorée et est peu coûteuse en ressources.

Selon un mode particulier de l'invention, le seuil prédéterminé est égal à deux.

Ainsi, la détermination de l'uniformité de la répartition d'un texte est améliorée et est peu coûteuse en ressources.

Selon un mode particulier de l'invention, le au moins un gradient est déterminé à partir d'un filtre de Sobel ou de Prewitt.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 représente un exemple de réalisation d'un dispositif de décision pour une image constituée de pixels, si un traitement de ladite image est pertinent ;
la Fig. 2 représente un algorithme de décision pour une image constituée de pixels, si un traitement de ladite image est pertinent ;
la Fig. 3 représente un exemple d'algorithme de détermination de l'uniformité de la répartition de texte dans une image numérique constituée de pixels ;
la Fig. 4 est une courbe représentative des valeurs des accumulations de gradients obtenues pour chaque ligne d'une image numérique dans laquelle la répartition de texte est uniforme ;
la Fig. 5 est une courbe représentative des valeurs des accumulations de gradients obtenues pour chaque ligne d'une image numérique dans laquelle la répartition de texte n'est pas uniforme ;
la Fig. 6 est une courbe représentative des maxima locaux déterminés sur les lignes d'une image numérique dans laquelle la répartition de texte est uniforme ;
la Fig. 7 est une courbe représentative des maxima locaux déterminés sur les lignes d'une image numérique dans laquelle la répartition de texte n'est pas uniforme ;

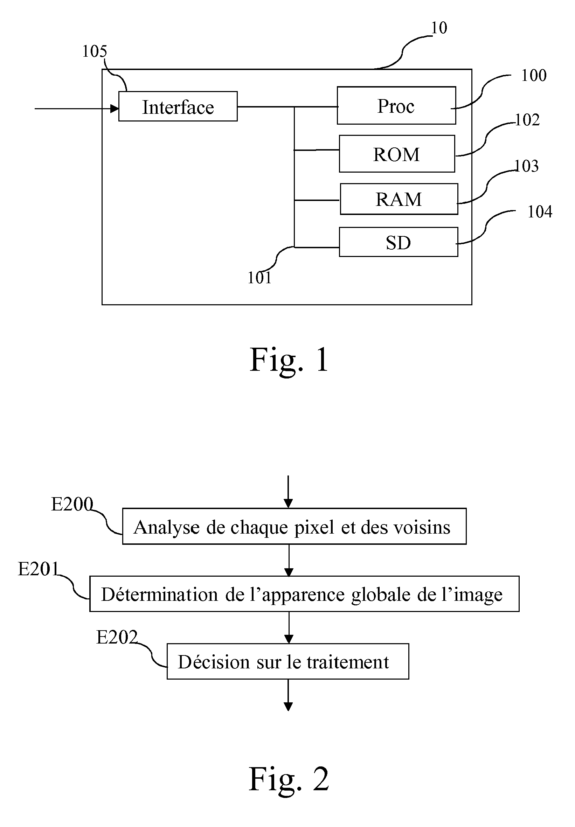

La **Fig. 1** représente un exemple de réalisation d'un dispositif de décision pour une image constituée de pixels, si un traitement de ladite image est pertinent.

Le dispositif 10 de décision, pour une image constituée de pixels, si un traitement de ladite image est pertinent, comporte :

- un processeur, micro-processeur, microcontrôleur 100 ;
- une mémoire volatile 103 ;
- une mémoire non volatile 102;
- éventuellement, un lecteur 104 de médium de stockage, tel qu'un lecteur de carte SD (*Secure Digital Card* en anglais ou *Carte Numérique Sécurisée* en français) ou un disque dur pour mémoriser les documents traités par la présente invention ;

- une interface 105 avec un réseau de communication, comme par exemple un réseau de radiotéléphonie cellulaire ou Internet par laquelle des documents à traiter selon la présente invention sont reçus.
- un bus de communication reliant le processeur 100 à la mémoire ROM 103, à la mémoire RAM 103, au lecteur de médium de stockage 104 et à l'interface 105.

Le processeur 100 est capable d'exécuter des instructions chargées dans la mémoire volatile 103 à partir de la mémoire non volatile 102, d'une mémoire externe (non représentée), d'un support de stockage, tel qu'une carte SD ou autre, ou d'un réseau de communication. Lorsque le dispositif 10 est mis sous tension, le processeur 100 est capable de lire de la mémoire volatile 103 des instructions et de les exécuter. Ces instructions forment un programme d'ordinateur qui cause la mise en oeuvre, par le processeur 100, de tout ou partie du procédé décrit en relation avec la Fig. 2 et/ou 3.

Tout ou partie du procédé décrit en relation avec la Fig. 2 et/ou 3 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Porters Programmable sur le terrain* en français) ou un ASIC (*Application-Specific Integrated Circuit* en anglais ou *Circuit Intégré Spécifique à une Application* en français).

La **Fig. 2** représente un algorithme de décision pour une image constituée de pixels, si un traitement de ladite image est pertinent.

Plus précisément, le présent algorithme est exécuté par le processeur 100 du dispositif 10.

A l'étape E200, le processeur 100 analyse chaque pixel de l'image et de ses pixels voisins. Par exemple, le nombre de voisins est égal à huit.

A l'étape suivante E201, le processeur 100 détermine une apparence globale de l'image à partir de l'analyse de chaque pixel.

A l'étape suivante E202, le processeur 100 décide si le traitement de ladite image est effectué en fonction de l'apparence globale de l'image déterminée.

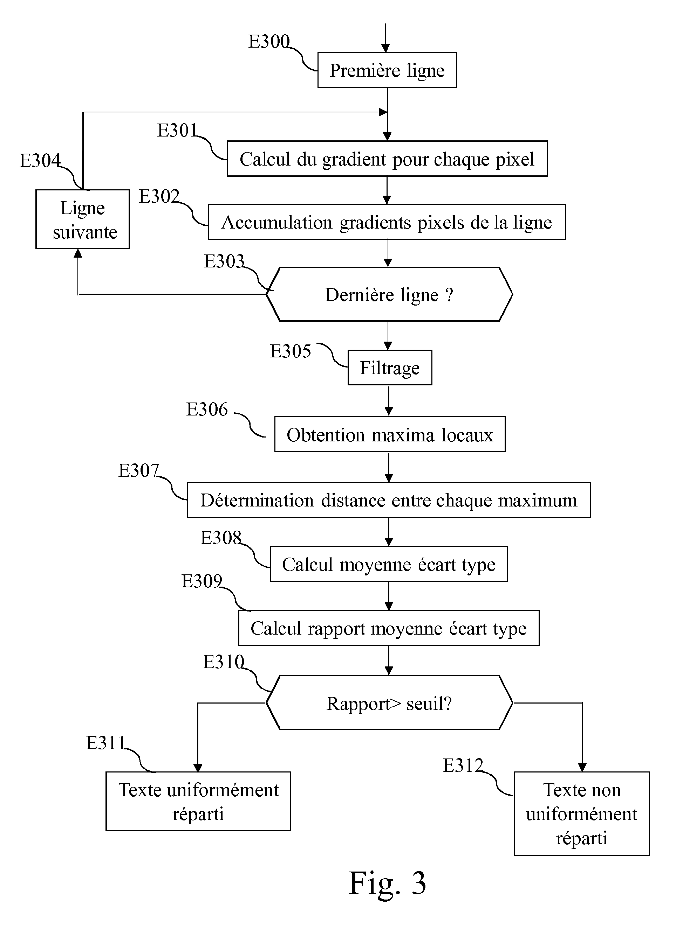

Par exemple, le traitement de l'image est une reconnaissance de caractères comme cela sera décrit en référence à la Fig. 3, une amélioration du rendu de photos numérisées, une reconnaissance d'images contenant des graphiques et des légendes.

La **Fig. 3** représente un algorithme de détermination de l'uniformité de la répartition de texte dans une image numérique constituée de pixels ;

Plus précisément, le présent algorithme est exécuté par le processeur 100 du dispositif 10.

A l'étape E300, le processeur 100 sélectionne une première ligne constituée de pixels de l'image numérique à traiter. L'image numérique est par exemple une page d'un document numérisé ou une partie d'une page du document numérisé.

Par exemple, si le texte est orienté de la gauche vers la droite ou de la droite vers la gauche, le processeur 100 sélectionne la première ligne en haut de l'image. Par exemple, si le texte est orienté du haut vers le bas, le processeur 100 sélectionne la première ligne sur le côté gauche de l'image.

A l'étape suivante E301, le processeur 100 calcule au moins un gradient pour chaque pixel de la ligne. Par exemple, le gradient est calculé avec un filtre de Prewitt ou un filtre de Sobel.

Le processeur 100 calcule par exemple, lorsque le texte est orienté horizontalement, le gradient horizontal $g_h$ en appliquant sur le pixel pour lequel le gradient est calculé et les pixels voisins du pixel à l'aide de la matrice suivante :

$$\frac{1}{3}\begin{bmatrix} -1 & 0 & 1 \\ -1 & 0 & 1 \\ -1 & 0 & 1 \end{bmatrix}$$

Le processeur 100 calcule par exemple, lorsque le texte est orienté verticalement, le gradient vertical $g_v$ en appliquant sur le pixel pour lequel le gradient est calculé et les pixels voisins du pixel à l'aide de la matrice suivante :

$$\frac{1}{3}\begin{bmatrix} -1 & -1 & -1 \\ 0 & 0 & 0 \\ 1 & 1 & 1 \end{bmatrix}$$

En variante, le processeur 100 calcule le gradient vertical et le gradient horizontal et détermine la norme des deux gradients à l'aide de la formule suivante :

$$g = \sqrt{g_h^2 + g_v^2}$$

A l'étape suivante E302, le processeur 100 effectue la sommation de la valeur de chaque gradient calculé pour un pixel de la ligne.

A l'étape suivante E303, le processeur 100 vérifie si toutes les lignes de l'image ont été traitées. Dans l'affirmative, le processeur 100 passe à l'étape E305. Dans la négative, le processeur 100 passe à l'étape E304, sélectionne la ligne suivante, incrémente un indice de ligne, et retourne à l'étape E301 pour un traitement de celle-ci.

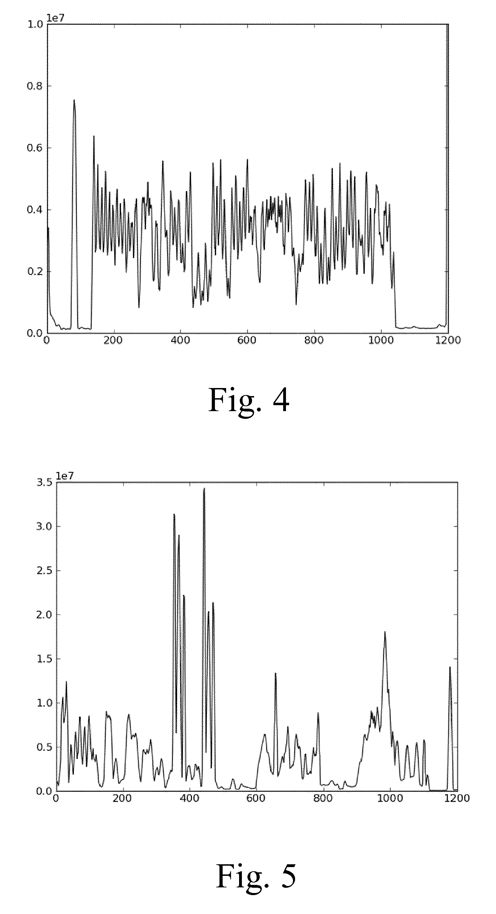

La **Fig. 4** est une courbe représentative des valeurs des accumulations de gradients obtenues pour chaque ligne d'une image numérique dans laquelle la répartition de texte est uniforme.

Sur l'axe horizontal, sont représentés les indices des lignes de l'image. L'axe vertical représente la valeur des sommes des gradients calculés pour une image numérique dans laquelle la répartition de texte est uniforme.

Les variations de la courbe représentée en Fig. 4 sont régulières.

La **Fig. 5** est une courbe représentative des valeurs des accumulations de gradients obtenues pour chaque ligne d'une image numérique dans laquelle la répartition de texte n'est pas uniforme.

Sur l'axe horizontal, sont représentés les indices des lignes de l'image. L'axe vertical représente la valeur des sommes des gradients calculés pour une image numérique dans laquelle la répartition de texte n'est pas uniforme.

Les variations de la courbe représentée en Fig. 5 sont irrégulières.

A l'étape E305, le processeur 100 filtre les valeurs des sommes calculées à l'étape E302.

Par exemple, le processeur 100 détermine, pour chaque somme, la moyenne de la somme avec les valeurs des sommes des lignes voisines. Le nombre de lignes voisines est par exemple égal à 5, 7, 9 voire plus.

Il est à remarquer ici que le calcul de moyenne peut être remplacé par n'importe quel filtre passe-bas connu de l'homme de l'art.

A l'étape E306, le processeur 100 obtient les maxima locaux de l'image.

Par exemple, le processeur 100 compare, pour chaque ligne de l'image, la moyenne de la ligne déterminée à l'étape E305 avec les moyennes déterminées à l'étape E305 de ses deux lignes voisines. Le processeur 100 identifie si la ligne comporte un maximum local si la moyenne de la ligne déterminée est supérieure aux deux moyennes de ses deux lignes voisines. En variante, un nombre plus important de moyennes de lignes voisines est utilisé.

Lorsqu'une ligne comporte un maximum local, le processeur 100 mémorise l'indice de la ligne. A une ligne qui comporte un maximum local, est associée la valeur 1. A une ligne qui ne comporte pas un maximum local, est associée la valeur 0.

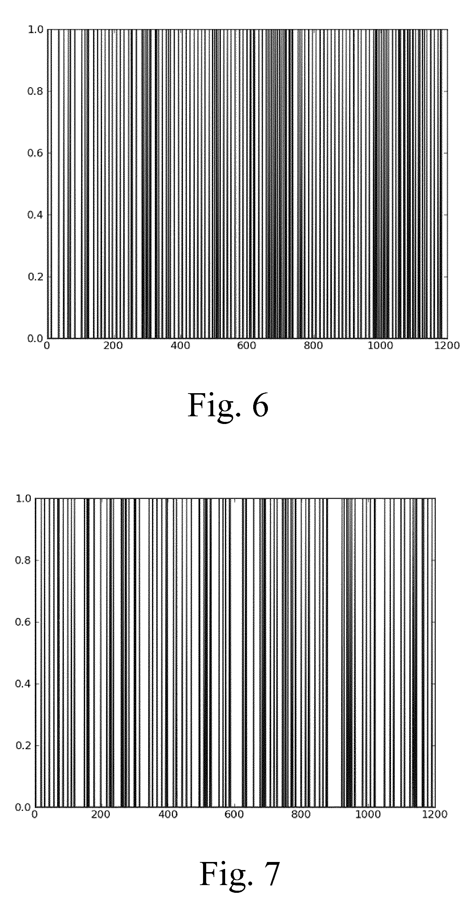

La Fig. 6 est une courbe représentative des maxima locaux déterminés sur les lignes d'une image numérique dans laquelle la répartition de texte est uniforme.

Sur l'axe horizontal, sont représentés les indices des lignes de l'image. L'axe vertical représente la valeur 1 ou 0 associée à chaque ligne.

Comme le montre la Fig. 6, les maxima locaux sont régulièrement répartis lorsque l'image comporte du texte uniformément réparti.

La Fig. 7 est une courbe représentative des maxima locaux déterminés sur les lignes d'une image numérique dans laquelle la répartition de texte n'est pas uniforme.

Sur l'axe horizontal, sont représentés les indices des lignes de l'image. L'axe vertical représente la valeur 1 ou 0 associée à chaque ligne.

Comme le montre la Fig. 7, les maxima locaux sont irrégulièrement répartis lorsque l'image comporte du texte non uniformément réparti.

A l'étape suivante E307, le processeur 100 détermine, pour chaque maximum local, sa distance, en nombre de lignes, avec le maximum local suivant.

Par exemple, le processeur 100 soustrait les indices des lignes des deux maxima locaux les plus proches et mémorise le résultat de chaque soustraction.

A l'étape suivante E308, le processeur 100 calcule une moyenne et un écart type sur les résultats des soustractions mémorisés et divise à l'étape E309 la moyenne par l'écart type.

A l'étape suivante E310, le processeur 100 compare le résultat de la division à un seuil prédéterminé.

Le seuil prédéterminé est par exemple compris entre 1,5 et 3. Par exemple, le seuil prédéterminé est égal à deux.

Si le résultat de la division est supérieur ou égal au seuil prédéterminé, le processeur 100 passe à l'étape E311 et l'image est une image comportant du texte uniformément réparti.

Si le résultat de la division est inférieur au seuil prédéterminé, le processeur 100 passe à l'étape E312 et l'image est une image comportant du texte non uniformément réparti.

Bien entendu, la présente invention n'est nullement limitée aux modes de réalisation décrits ici, mais englobe, bien au contraire, toute variante à la portée de l'homme du métier et particulièrement la combinaison de différents modes de réalisation de la présente invention.

**Revendications**

1. Procédé de décision parmi un ensemble d'images constituées de pixels, d'au moins une image pour laquelle un traitement de ladite image est pertinent, **caractérisé en ce que** le procédé comporte les étapes, exécutées par un dispositif, de :

   - analyse (E200) de chaque pixel de l'image et de ses pixels voisins,
   - détermination (E201) d'une apparence globale de l'image à partir de l'analyse de chaque pixel, l'apparence globale étant l'uniformité de la répartition des lignes de texte dans l'image,
   - décision (E202) si le traitement de ladite image est effectué en fonction de l'apparence globale de l'image déterminée

   et **en ce que** l'uniformité de la répartition de texte dans l'image est déterminée en effectuant les étapes de :

   - détermination (E301), pour chaque pixel de l'image d'au moins un gradient,
- sommation (E302), pour chaque ligne de pixels de l'image, des gradients des pixels de la ligne,
- détermination (E306) des lignes qui comportent des maxima locaux à partir des résultats des sommes,
- détermination (E310) si le texte est uniformément réparti ou non dans l'image en fonction de la régularité du placement des lignes comportant des maxima locaux dans l'image.

2. Procédé selon la revendication 1, **caractérisé en ce que** le au moins un gradient est un gradient dont l'orientation est identique à l'orientation présumée du texte dans l'image.

3. Procédé selon la revendication 1 ou 2, **caractérisé en ce que** la détermination de l'uniformité de la répartition de texte dans l'image comporte en outre une étape (E305) de filtrage des valeurs des gradients sommés.

4. Procédé selon la revendication 3, **caractérisé en ce que** l'étape de filtrage est réalisée en effectuant, pour chaque ligne, une moyenne de la somme des gradients de la ligne avec au moins la somme des gradients d'au moins une ligne voisine de la ligne.

5. Procédé selon la revendication 3, **caractérisé en ce que** la détermination des lignes qui comportent des maxima locaux est effectuée en comparant pour chaque ligne de l'image, la somme filtrée de la ligne avec les sommes filtrées de lignes voisines de la ligne et si la somme filtrée de la ligne déterminée est supérieure aux sommes filtrées des lignes voisines, la ligne comporte un maximum local.

6. Procédé selon l'une quelconque des revendications 1 à 3, **caractérisé en ce que** la détermination de l'uniformité de la répartition de texte dans l'image comporte en outre une étape de détermination (E307) de distances, exprimées en nombre de lignes entre les lignes comportant des maxima locaux les plus proches deux à deux.

7. Procédé selon la revendication 6, **caractérisé en ce que** la détermination de l'uniformité de la répartition de texte dans l'image comporte en outre les étapes de :

    - détermination (E308) d'une moyenne et d'un écart type à partir des distances déterminées,
    - comparaison (E310) du rapport entre la moyenne et l'écart type déterminés à partir des distances à un seuil prédéterminé,

et **en ce que** la détermination si le texte est uniformément réparti ou non dans l'image est effectuée en comparant le rapport au seuil prédéterminé.

8. Procédé selon l'une quelconque des revendications 1 à 6, **caractérisé en ce que** le au moins un gradient est déterminé à partir d'un filtre de Sobel ou de Prewitt.

9. Dispositif de décision pour une image constituée de pixels, si un traitement de ladite image est pertinent, **caractérisé en ce que** le procédé comporte les étapes, exécutées par un dispositif:

    - des moyens d'analyse de chaque pixel de l'image et de ses pixels voisins,
    - des moyens de détermination d'une apparence globale de l'image à partir de l'analyse de chaque pixel, l'apparence globale étant l'uniformité de la répartition des lignes de texte dans l'image,
    - des moyens de décision si le traitement de ladite image est effectué en fonction de l'apparence globale de l'image déterminée,

et **en ce que** les moyens de détermination de l'uniformité de la répartition de texte dans l'image comportent :

    - des moyens de détermination, pour chaque pixel de l'image d'au moins un gradient,
    - des moyens de sommation, pour chaque ligne de pixels de l'image, des gradients des pixels de la ligne,
    - des moyens de détermination des lignes qui comportent des maxima locaux à partir des résultats des sommes,
    - des moyens de détermination si le texte est uniformément réparti ou non dans l'image en fonction de la régularité du placement des lignes comportant des maxima locaux dans l'image.

Fig. 1

E200 — Analyse de chaque pixel et des voisins

E201 — Détermination de l'apparence globale de l'image

E202 — Décision sur le traitement

Fig. 2

E300 ── Première ligne

E301 ── Calcul du gradient pour chaque pixel

E304 ── Ligne suivante

E302 ── Accumulation gradients pixels de la ligne

E303 ── Dernière ligne ?

E305 ── Filtrage

E306 ── Obtention maxima locaux

E307 ── Détermination distance entre chaque maximum

E308 ── Calcul moyenne écart type

E309 ── Calcul rapport moyenne écart type

E310 ── Rapport> seuil?

E311 ── Texte uniformément réparti

E312 ── Texte non uniformément réparti

Fig. 3

Fig. 4

Fig. 5

Fig. 6

Fig. 7

Europäisches
Patentamt

European
Patent Office

Office européen
des brevets

# RAPPORT DE RECHERCHE EUROPEENNE

Numéro de la demande

EP 14 15 4842

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | GARCIA C ET AL: "Text detection and segmentation in complex color images", ACOUSTICS, SPEECH, AND SIGNAL PROCESSING, 2000. ICASSP '00. PROCEEDING S. 2000 IEEE INTERNATIONAL CONFERENCE ON 5-9 JUNE 2000, PISCATAWAY, NJ, USA,IEEE, vol. 6, 5 juin 2000 (2000-06-05), pages 2326-2329, XP010504769, DOI: 10.1109/ICASSP.2000.859306 ISBN: 978-0-7803-6293-2 * Section 3 * | 1-9 | INV. G06K9/00 G06K9/46 |
| X | US 2004/042659 A1 (GUO JINHONG KATHERINE [US] ET AL) 4 mars 2004 (2004-03-04) * alinéas [0002], [0013], [0063] - [0065]; figures 7-10 * | 1-9 | |
| X | EP 1 229 485 A2 (MATSUSHITA ELECTRIC IND CO LTD [JP]) 7 août 2002 (2002-08-07) * abrégé * * alinéas [0017], [0023] * | 1-9 | |
| X | YE Q ET AL: "Fast and robust text detection in images and video frames", IMAGE AND VISION COMPUTING, ELSEVIER, GUILDFORD, GB, vol. 23, no. 6, juin 2005 (2005-06), pages 565-576, XP004850487, ISSN: 0262-8856, DOI: 10.1016/J.IMAVIS.2005.01.004 * Section 1, 2ème alinéa Section 4.1(4) * | 1-9 | DOMAINES TECHNIQUES RECHERCHES (IPC)  G06K |

-/--

Le présent rapport a été établi pour toutes les revendications

| Lieu de la recherche | Date d'achèvement de la recherche | Examinateur |
|---|---|---|
| La Haye | 24 février 2014 | Alecu, Teodor Iulian |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

Europäisches
Patentamt

European
Patent Office

Office européen
des brevets

## RAPPORT DE RECHERCHE EUROPEENNE

Numéro de la demande

EP 14 15 4842

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | "Statistical dispersion", Wikipedia, 25 octobre 2012 (2012-10-25), XP055071356, Extrait de l'Internet: URL:http://en.wikipedia.org/w/index.php?title=Statistical_dispersion [extrait le 2013-07-15] * le document en entier * ----- | 1-9 | |
| A | "Coefficient of variation", Wikipedia, 23 octobre 2012 (2012-10-23), XP055071354, Extrait de l'Internet: URL:http://en.wikipedia.org/w/index.php?title=Coefficient_of_variation [extrait le 2013-07-15] * le document en entier * ----- | 1-9 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 24 février 2014 | Alecu, Teodor Iulian |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 15 4842

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-02-2014

| Document brevet cité au rapport de recherche | Date de publication | Membre(s) de la famille de brevet(s) | Date de publication |
|---|---|---|---|
| US 2004042659 A1 | 04-03-2004 | AUCUN | |
| EP 1229485 A2 | 07-08-2002 | EP 1229485 A2<br>JP 3623200 B2<br>JP 2002319025 A<br>US 2002102022 A1 | 07-08-2002<br>23-02-2005<br>31-10-2002<br>01-08-2002 |

EPO FORM P0460

Pour tout renseignement concernant cette annexe : voir Journal Officiel de l'Office européen des brevets, No.12/82